# EUROPEAN PATENT APPLICATION

(11) **EP 4 378 813 A1**
(43) Date of publication of application: **05.06.2024**
(21) Application number: 22849742.6
(22) Date of filing: 06.07.2022
(51) Int. Cl.: B63B 21/50, B63B 21/26, B63B 35/28, E02B 17/08

(54) **RACK-AND-PINION TYPE JACKING SYSTEM FOR JACK-UP BARGE**

(30) Priority: 26.07.2021 KR 20210097514
(71) Applicant: Myung Il Jack Up Offshore Co. Ltd, Gunsan-si Jeollabuk-do 54002 (KR)
(72) Inventor: KIM, Munyong, Gunsan-si Jeollabuk-do 54005 (KR)
(74) Representative: dompatent von Kreisler Selting Werner - Partnerschaft von Patent- und Rechtsanwälten mbB
(86) International application number: PCT/KR2022/009730
(87) International publication number: WO 2023/008765

(57) **Abstract**

Disclosed is a jacking apparatus configured to jack up a barge portion of a jack-up barge while adjusting a location of the barge portion along a post fixed to the seabed and to fix the barge portion at a desired location. The jacking apparatus has a rack-and-pinion structure configured to jack up the barge portion of the jack-up barge, wherein the rack-and-pinion structure stably and firmly grips the surface of the post, secures stability when upward-and-downward movement of a platform is performed along the post, and has a simple structure so as to economically provide the rack-and-pinion structure.

## Description

### [Technical Field]

The present invention relates to a jacking apparatus configured to jack up a barge portion of a jack-up barge while adjusting a location of the barge portion along a post fixed to the seabed and to fix the barge portion at a desired location, and more particularly to a rack-and-pinion structure configured to jack up a barge portion of a jack-up barge, wherein the rack-and-pinion structure stably and firmly grips the surface of a post, secures stability when upward-and-downward movement of a platform is performed along the post, and has a simple structure so as to economically provide the rack-and-pinion structure.

### [Background Art]

Generally, in order to avoid swells and waves and to carry out large-scale construction work at sea, a barge such as a jack-up barge is floated on the sea and fixed at a working location at sea. Thereafter, construction work at sea starts.

During this construction work, seabed strata are excavated in a sea area, and structures are installed in the sea. These days, a jack-up barge is mainly used to install an offshore wind power generator.

The jack-up barge described above is formed of a barge portion that provides space in which work tools are disposed and workers perform certain tasks, and at least three or four posts (legs) that support the barge by floating the same on the water.

Particularly, the jack-up barge is gripped by the posts (legs) so that the height of the jack-up barge is adjustable upwards and downwards. To this end, on the jack-up barge corresponding to the posts (legs), a jacking apparatus is provided to lift and jack up the barge along the posts (legs) and to fix the barge at a desired location in a state of maintaining flatness of the barge.

The jacking apparatus is installed at each of the four corners of the jack-up barge and is configured to be fixed at a desired location while being moved upwards and downwards in the longitudinal direction of the posts (legs).

That is, the jacking apparatus adjusts the height of the barge by moving the barge upwards and downwards along the posts (legs), thereby allowing the barge to be disposed spaced apart from the water surface at a desired height.

Meanwhile, as shown in the drawings of Korean Patent Laid-Open Publication No. 10-2003-0017319 (titled "HOLDING APPARATUS FOR BALL-TYPE ELEVATING FOR PLATFORM FIXING OF SELF-ELEVATING BARGE" filed on March 20, 2003), a typical jacking apparatus includes a pair of upper and lower annular guides configured to surround a post fixed upright to the seabed and to guide upward-and-downward movement of a platform, and a clamping member disposed between the annular guides, the clamping member being tightened or opened while rotating around the annular guides and adhering to outer peripheral surface of the post so as to fix the platform to the post.

The clamping member is formed of two members, in which one of the two members is formed to be integrated with the annular guides or fixed to the annular guides, and the other of the two members includes a pair of semicircular connecting members rotatably hinged to the annular guides, a plurality of alveolar portions mounted on each of the connecting members at predetermined intervals to be in close contact with the post, and a hydraulic cylinder connected to one end of the semicircular connecting members rotatably coupled to the annular guides and configured to push the rotatable connecting members toward the fixed connecting members so as to bring the alveolar portions into close contact with the post.

That is, the connecting members operated by hydraulic force of the hydraulic cylinder are pushed toward the fixed connecting members so as to bring the alveolar portions into close contact with the post, thereby fixing the platform to the post.

Further, in Korean Patent Laid-Open Publication No. 10-2014-0050162 (titled "JACK-UP BARGE HAVING SEA BRIDGE MOUNTED THEREON" filed on April 25, 2014), disclosed is a jack-up barge having a sea bridge mounted thereon, the jack-up barge including a floating barge having an elevating housing formed therein and configured to perform upward-and-rearward movement thereof by allowing elevating legs inserted thereinto to land on the sea floor surface, a rotating pier part installed on the floating barge in a horizontally rotatable manner, a sea bridge rotation hinge part hinged to a sea bridge housing installed on the upper surface of the rotating pier part and configured to rotate upwards and downwards, and an extruded girder installed on a front portion of the sea bridge rotation hinge part, wherein the extruded girder is manufactured to include an inner extruded girder so as to be extendable to the seabed by the sea bridge rotation hinge part.

Additionally, in Korean Patent Laid-Open Publication No. 10-2013-0060506 (titled "APPARATUS CONFIGURED TO CHECK PLATFORM HORIZONTAL POSITION AND HORIZONTAL STATE OF SELF-ELEVATING BARGE FOR OFFSHORE DRILLING" filed on May 28, 2013), disclosed is an apparatus configured to check a platform horizontal position and a horizontal state of a barge including a platform assembled with a plurality of posts in a vertically movable manner and an operating cylinder having a rod end connected to a holding apparatus clamped to the plurality of posts and adopted to perform an elevating operation, the operating cylinder varying the height of the platform, the apparatus including a measurement part including a plurality of fluid reception pipes arranged in parallel with the outer edge of the platform and a plurality of connection pipes each having a water head pipe extending vertically at a predetermined height from a pair of branch pipes, the measurement part communicating between the adjacent fluid reception pipes and being filled with fluid so as to form a water level at a predetermined height in the water head pipe, a sensor part having a sensor member provided on a cap assembled with an upper portion of the water head pipe disposed at each corner of the platform and configured to detect a change in water level in the water head pipe, and a controller configured to check a horizontal state of the platform based on the change in water level detected by the sensor part, the controller vertically moving one of the plurality of operating cylinders respectively disposed at corners of the platform so as to maintain the horizontal state.

Meanwhile, in Korean Patent Laid-Open Publication No. 10-2013-0005874 (titled "BARGE HOISTING APPARATUS" filed on January 18, 2013), disclosed is a barge hoisting apparatus configured to lift and lower a barge, the barge hoisting apparatus including a hull, a jack house, and a leg pipe, wherein the leg pipe has four rows of coupling holes formed on the circular outer peripheral surface thereof in the longitudinal direction thereof, the leg pipe has a pair of first cylinder blocks installed around the outer peripheral surface thereof and configured to face each other, the first cylinder blocks have a pair of second cylinder blocks installed therebetween and configured to face each other, each of the first and second cylinder blocks includes a leg pin coupled to a coupling hole of the leg pipe, a leg pin bracket having a shape of a flat plate and supporting the leg pin, the leg pin bracket having a through hole formed at a central portion thereof and configured to allow the leg pin to pass therethrough and coupling holes formed at opposite lower portions thereof and configured to allow cylinder rods to be respectively coupled thereto, the through hole and the coupling holes forming a triangular shape, and two cylinder assemblies each having a cylinder rod tip coupled to each of the coupling holes of the leg pin bracket. Here, the hull has a fixing bracket coupled thereto, and the fixing bracket has a bottom portion of the cylinder assembly coupled thereto.

Additionally, in Korean Patent Laid-Open Publication No. 10-2011-0087681 (titled "LIFTING-AND-LOWERING APPARATUS FOR BARGE" filed on August 31, 2011), disclosed is a lifting-and-lowering apparatus for a barge including a hull, a jack house, and a leg pipe, the lifting-and-lowering apparatus including upper and lower traverses respectively coupled to upper and lower portions of the jack house and located to surround upper and lower outer peripheral surfaces of the leg pipe, a plurality of lifting cylinders connected and installed between the upper and lower traverses and configured to respectively lift and lower the upper and lower traverses in the upward-and-downward direction, and a plurality of locking means provided on the outer peripheral surfaces of the upper and lower traverses and configured to lock and unlock the upper and lower traverses moving along the leg pipe with respect to the leg pipe.

### [Disclosure]

### [Technical Problem]

Therefore, the present invention has been made in view of the above problems, and it is an object of the present invention to provide a jacking apparatus configured to jack up a barge portion of a jack-up barge while adjusting a location of the barge portion along a post fixed to the seabed and to fix the barge portion at a desired location, and more particularly to a rack-and-pinion structure configured to jack up a barge portion of a jack-up barge, wherein the rack-and-pinion structure stably and firmly grips the surface of a post, secures stability when upward-and-downward movement of a platform is performed along the post, and has a simple structure so as to economically provide the rack-and-pinion structure.

### [Technical Solution]

In accordance with the present invention, the above and other objects can be accomplished by the provision of a rack-and-pinion type jacking system for a jack-up barge, the rack-and-pinion type jacking system including a post (10), a platform (20) moved upwards or downwards along the post (10), a controller (30) installed on the platform (20) and configured to supply power, and a driving means (40) controlled by receiving the power from the controller (30), wherein the driving means (40) is coupled to the post (10) on one side of the platform (20) so as to enable the platform (20) to be driven upwards and downwards.

The post (10) may have a rack gear (11) provided on one side thereof and formed to extend in a longitudinal direction of the post (10), and the post (10) may have a cover coupled to an outer circumferential surface thereof and configured not to cover the rack gear (11), wherein the cover may have a plurality of partition walls formed on an outer surface thereof, wherein the partition walls may be integrally combined with the cover so as to form a skeleton and may be used to couple the driving means (40) to the post (10) .

The partition walls may have a bracket (b) provided on an outside thereof and configured to stably couple the driving means (40) thereto through bolt coupling, and the driving means (40) may include an external case (41) coupled thereto by the bracket (b).

the driving means (40) may include a crankshaft (42) configured to have three eccentric areas, connecting rods (43) each coupled to a corresponding one of the three eccentric areas of the crankshaft (42), and cylinders (44) each coupled to a corresponding one of the connecting rods (43), each of the cylinders (44) being variable in length, wherein the crankshaft (42), the connecting rods (43), and the cylinders (44) may be configured to be included in the external case (41).

The crankshaft (42) may have a pinion gear (p) coupled to one end thereof and engaged with the rack gear (11) of the post (10).

The crankshafts (42), the connecting rods (43), and the cylinders (44) each may have a symmetrical structure with respect to the pinion gear (p), and the symmetrical structure may enable the driving means (40) to form an extended configuration.

Each of the cylinders (44) may be coupled to a corresponding one of the three eccentric areas by the crankshaft (42), thereby enabling the pinion gear (p) to be moved upwards or downwards along the rack gear (11) when any one of the cylinders (44) is driven.

### [Advantageous effects]

In the related art, when cylinders are individually driven and force is applied from each of the cylinders simultaneously, it is possible to generate force to move a barge along a post. As a result, there is a problem in that significant energy generation is required to move the barge along the post. Further, when a jacking system is newly built or a jacking system is maintained or replaced, there is another problem in that the entirety of the jacking system needs to be replaced.

On the other hand, according to a rack-and-pinion type jacking system for a jack-up barge of the present invention, since force required for driving is shared by a crankshaft, it is possible not only to save energy required for driving, but also to perform normal driving even if an abnormality occurs in any one of the cylinders. Further, during replacement work, it is possible to replace, depending on the size of a platform (20), only a unit (motor or the like) related to a controller (30) adopted to supply power, thereby improving economic efficiency.

Even if replacement of detailed parts of a driving means (40) is performed, replacement of parts is easily performable.

In addition, the present invention has a driving cylinder and a crank structure applied to gripping pressure and gear driving of a rack gear formed on the surface of a post and a pinion gear provided on a barge, and linear motion generated by the driving cylinder is directly converted into rotary motion, thereby rotating the pinion gear. Accordingly, an operation of jacking-up the barge along the post is performed through linear movement of the rack gear. Compared to the conventional rack-and-pinion jacking system that drives a motor and a reducer, the present invention provides a simple and size-reduced structure, thereby having an effect of improving economic efficiency.

In addition, when the barge is moved upwards or downwards along the post, it is possible to maintain a constant speed state, thereby having an effect of securing stability.

### [Description of Drawings]

The above and other objects, features and other advantages of the present invention will be more clearly understood from the following detailed description taken in conjunction with the accompanying drawings, in which:
FIG. 1 is a diagram showing a rack-and-pinion type jacking system for a jack-up barge according to the present invention;
FIG. 2 is a diagram showing a driving means of the rack-and-pinion type jacking system for the jack-up barge according to the present invention;
FIG. 3 is a diagram showing another example of the driving means of the rack-and-pinion type jacking system for the jack-up barge according to the present invention;
FIGs. 4 and 5 are diagrams specifically showing the driving means of the rack-and-pinion type jacking system for the jack-up barge according to the present invention;
FIG. 6 is a diagram showing an example in which an external case of the driving means of the rack-and-pinion type jacking system for the jack-up barge according to the present invention is combined with the driving means; and
FIG. 7 is a diagram showing the internal shape of the driving means in FIG. 6 in a state in which the external case is removed.

### [Best Mode]

Terms and words used in this specification and claims should not be construed as being limited to their ordinary or dictionary meanings. The inventor may appropriately define concepts of the terms and the words in order to describe the invention in the best mode. Further, the terms and the words should be interpreted as meanings and concepts consistent with the technical idea of the present invention.

Therefore, embodiments described in this specification and configurations shown in the drawings are only the most preferred embodiments of the present invention and do not represent all the technical ideas of the present invention. Accordingly, it should be understood that there may be various equivalents and modifications that may substitute the embodiments herein at the time of filing of the present application.

Hereinafter, prior to description of the present invention with reference to the drawings, it is noted that details that are not necessary to describe the gist of the present invention, that is, known configurations that may be easily added by a person skilled in the art are not shown or described in detail.

The present invention relates to a jacking apparatus configured to jack up a barge portion of a jack-up barge while adjusting a location of the barge portion along a post fixed to the seabed and to fix the barge portion at a desired location, and more particularly to a rack-and-pinion structure configured to jack up a barge portion of a jack-up barge, wherein the rack-and-pinion structure stably and firmly grips the surface of a post, secures stability when upward-and-downward movement of a platform is performed along the post, and has a simple structure so as to economically provide the rack-and-pinion structure.

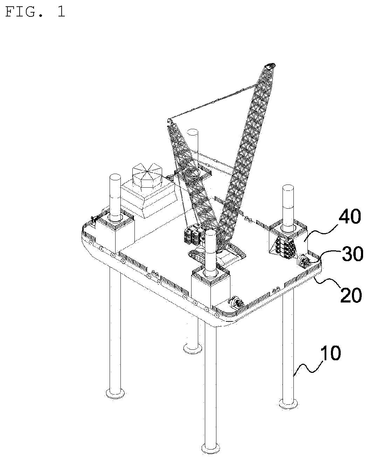

FIGs. 1 to 10 are diagrams showing a rack-and-pinion type jacking system for a jack-up barge according to an embodiment of the present invention. The rack-and-pinion type jacking system for the jack-up barge according to the embodiment is related to a technique in which a platform 20 of an elevating barge is fixed to a post 10, the platform 20 is moved upwards or downwards along the post 10, and the platform 20 is jacked up so as to be fixed at a desired location and height at sea.

To this end, although not shown in the drawing, the platform 20 may have a through hole formed therein and formed to penetrate the post 10.

FIG. 1 is a diagram showing the rack-and-pinion type jacking system for the jack-up barge according to the present invention.

As shown in FIG. 1, the rack-and-pinion type jacking system for the jack-up barge of the present invention according includes a plurality of posts 10, each of the posts 10 having a predetermined height and standing from the ground (water surface), the platform 20 being moved upwards or downwards along the post 10, a controller 30 installed on the platform 20 and configured to supply power, and a driving means 40 controlled by receiving power from the controller 30 and coupled to the post 10 on one side of the platform 20 so as to enable the platform 20 to be driven upwards and downwards.

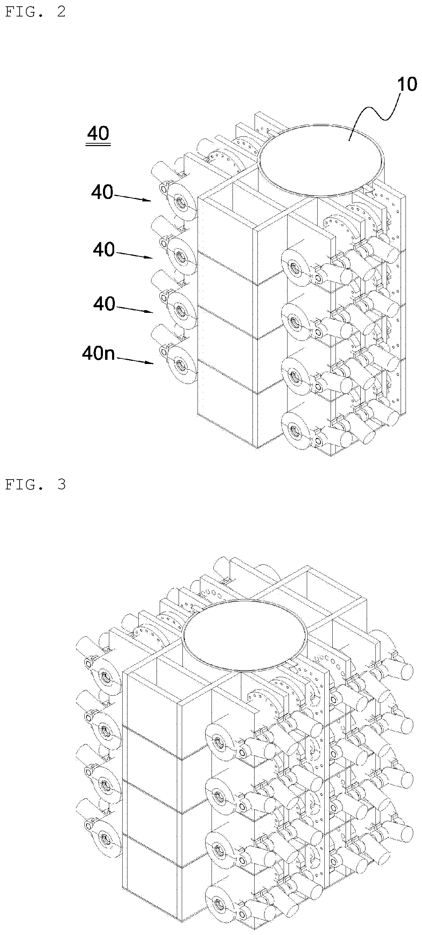

Here, the driving means 40 is shown in FIGs. 2 and 3.

FIG. 2 is a diagram showing the driving means of the rack-and-pinion type jacking system for the jack-up barge according to the present invention, and FIG. 3 is a diagram showing another example of the driving means of the rack-and-pinion type jacking system for the jack-up barge according to the present invention.

As shown in the attached drawing, the driving means 40 of the present invention includes a plurality of stacked units, and each unit is controlled by receiving power from the controller 30, thereby enabling the platform to be moved upwards or downwards along the post 10.

Meanwhile, according to FIG. 3, the driving means 40 may be configured to be extended so that the structure shown in FIG. 2 has a symmetrical shape.

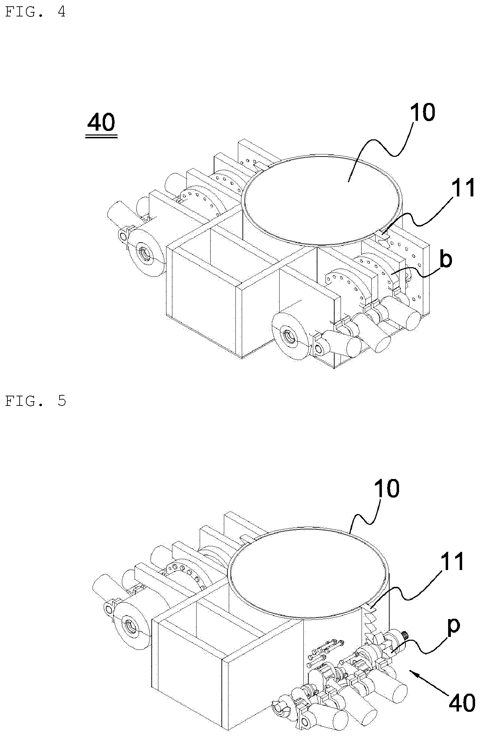

More specifically, the driving means 40 will be described with reference to FIGs. 4 and 5.

FIGs. 4 and 5 are diagram specifically showing the driving means of the rack-and-pinion type jacking system for the jack-up barge according to the present invention.

As shown in the attached drawings, the post 10 has a rack gear 11 provided on one side thereof and formed to extend in the longitudinal direction of the post 10.

In addition, the post 10 has a cover (reference numeral is not shown) coupled to the outer circumferential surface thereof and configured not to cover the rack gear 11, and the cover has a plurality of partition walls formed on the outer surface thereof. Here, the partition walls are integrally combined with the cover so as to form a skeleton, and the skeleton is used to allow the driving means 40 to be coupled to the cover and the skeleton.

In addition, the skeleton has a bracket b provided on the outside thereof and configured to stably couple the driving means 40 thereto through bolt coupling.

Hereinafter, the driving means 40 will be described with reference to FIGs. 5 to 7.

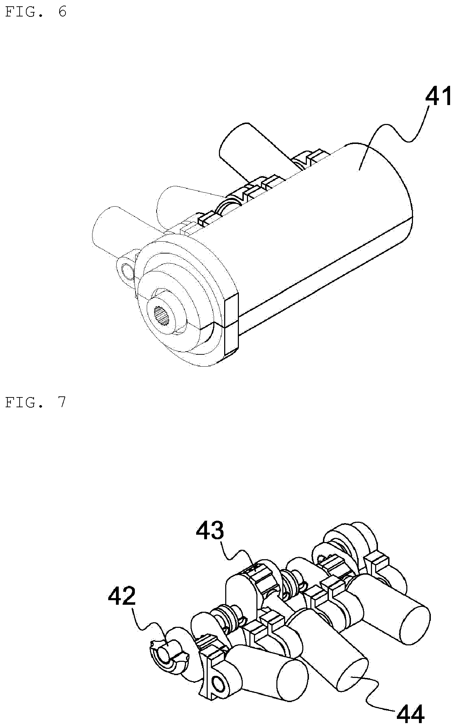

FIG. 6 is a diagram showing an example in which an external case of the driving means of the rack-and-pinion type jacking system for the jack-up barge according to the present invention is combined with the driving means, and FIG. 7 is a diagram showing the internal shape of the driving means in FIG. 6 in a state in which the external case is removed.

The driving means 40 includes an external case 41 as shown in FIG. 6. Here, the external case 41 is integrally formed with or welded to the skeleton as shown in FIG. 4 and is firmly coupled to the bracket b.

The interior of this external case 41 may be seen in FIGs. 5 and 7. More specifically, a crankshaft 42 configured to have three eccentric areas, connecting rods 43 each coupled to a corresponding one of the three eccentric areas of the crankshaft 42, and cylinders 44 each coupled to a corresponding one of the connecting rods 43 are included in the external case 41, in which each of the cylinders 44 is variable in length.

In this case, the cylinder 44 may be controlled under the control of the controller 30 so as to allow the crankshaft 42 to be driven by the variable length of the cylinder 44. To this end, the cylinder 44 has one end coupled to the controller 30 and configured to allow the cylinder 44 to be operated within a range of movement at a predetermined angle through a combination of a ring and a hinge.

In addition, a coupling relationship between the cylinder 44 and the controller 30 is intended to include all configurations that may be clearly derived by a person skilled in the art at the time of filing the present invention.

In addition, the configuration of the driving means 40 having an extended length described with reference to FIGs. 2 and 3 means a configuration in which the configuration of the crankshaft 42 to the cylinder 44 described above is further extended. In other words, the above-described configuration means a configuration including six cylinders and two crankshafts.

Further, the crankshaft 42 has a pinion gear p coupled to one end thereof. Here, in the case of the driving means 40 having the above-described extended length, it should be understood that the driving means 40 has an extended configuration that is symmetrical with respect to the pinion gear p.

This pinion gear p is a gear configuration that is engaged with the rack gear 11 of the post 10. When the crankshaft 42 driven by the control of the controller 30 is driven, the pinion gear p is rotated along the rack gear 11, and upward-and-downward movement of the driving means 40 is controlled by force of the pinion gear p moved upwards or downwards along the rack gear 11, thereby making it possible to control upward-and-downward movement of the platform 20.

Referring to the related art, when cylinders are individually driven and force is applied from each of the cylinders simultaneously, it is possible to generate force to move a barge along a post. Accordingly, there is a problem in that significant energy generation is required to move the barge along the post. Further, when a jacking system is newly built or a jacking system is maintained or replaced, there is another problem in that the entirety of the jacking system needs to be replaced.

Even if a plurality of cylinder configurations are provided as in the present invention, since force required for driving is shared by a crankshaft, it is possible not only to save energy required for driving, but also to perform normal driving even if an abnormality occurs in any one of the cylinders. Further, during replacement work, it is possible to replace, depending on the size of the platform 20, only a unit (motor or the like) related to the controller 30 adopted to supply power, thereby improving economic efficiency.

Even if replacement of detailed parts of the driving means 40 is performed, replacement of parts is easily performable.

In this case, as shown in FIG. 7, a plurality of fixing means (reference numeral is not shown) may be provided on one side of the external case 41. Here, the plurality of fixing means are provided in the opposite directions with respect to one of the cylinders 44. Specifically, each of the plurality of fixing means refers to a member having a through hole formed in one side thereof and configured to allow the cylinder 44 to be fixed therein through coupling using a pin or a protrusion.

The above-described fixing means does not fix a rod of the cylinder 44 but fixes a cylinder cover that allows the rod to be accommodated therein and withdrawn therefrom, thereby enabling stable fixing of the cylinder and normal driving of the above-described structure.

Although preferred embodiments of the present invention have been described with reference to the attached drawings, those skilled in the art will appreciate that the present invention is not limited to the configurations shown in the attached drawings, and various modifications, additions, and substitutions are possible without departing from the technical scope of the present invention.

## Claims

1. A rack-and-pinion type jacking system for a jack-up barge, the rack-and-pinion type jacking system comprising:
a post (10);
a platform (20) moved upwards or downwards along the post (10);
a controller (30) installed on the platform (20) and configured to supply power; and
a driving means (40) controlled by receiving the power from the controller (30), wherein the driving means (40) is coupled to the post (10) on one side of the platform (20) so as to enable the platform (20) to be driven upwards and downwards.

2. The rack-and-pinion type jacking system according to claim 1, wherein the post (10) has a rack gear (11) provided on one side thereof and formed to extend in a longitudinal direction of the post (10), and wherein the post (10) has a cover coupled to an outer circumferential surface thereof and configured not to cover the rack gear (11), wherein the cover has a plurality of partition walls formed on an outer surface thereof, wherein the partition walls are integrally combined with the cover so as to form a skeleton and are used to couple the driving means (40) to the post (10).

3. The rack-and-pinion type jacking system according to claim 2, wherein the partition walls have a bracket (b) provided on an outside thereof and configured to stably couple the driving means (40) thereto through bolt coupling, and
wherein the driving means (40) comprises an external case (41) coupled thereto by the bracket (b).

4. The rack-and-pinion type jacking system according to claim 3, wherein the driving means (40) comprises:
a crankshaft (42) configured to have three eccentric areas;
connecting rods (43) each coupled to a corresponding one of the three eccentric areas of the crankshaft (42); and
cylinders (44) each coupled to a corresponding one of the connecting rods (43), each of the cylinders (44) being variable in length, and
wherein the crankshaft (42), the connecting rods (43), and the cylinders (44) are configured to be comprised in the external case (41).

5. The rack-and-pinion type jacking system according to claim 4, wherein the crankshaft (42) has a pinion gear (p) coupled to one end thereof and engaged with the rack gear (11) of the post (10).

6. The rack-and-pinion type jacking system according to claim 5, wherein the crankshafts (42), the connecting rods (43), and the cylinders (44) each have a symmetrical structure with respect to the pinion gear (p), wherein the symmetrical structure enables the driving means (40) to form an extended configuration.

7. The rack-and-pinion type jacking system according to claim 4, wherein each of the cylinders (44) is coupled to a corresponding one of the three eccentric areas by the crankshaft (42), thereby enabling the pinion gear (p) to be moved upwards or downwards along the rack gear (11) when any one of the cylinders (44) is driven.
